# EUROPEAN PATENT APPLICATION

(11) **EP 2 860 982 A1**
(43) Date of publication of application: **15.04.2015**
(21) Application number: 13803658.7
(22) Date of filing: 07.06.2013
(51) Int. Cl.: H04N 21/236

(54) **ELECTRONIC DEVICE, METHOD FOR TRANSMITTING AND RECEIVING STREAM IN ELECTRONIC DEVICE, PROGRAM, HOST DEVICE, AND METHOD FOR TRANSMITTING AND RECEIVING STREAM IN HOST DEVICE**

(30) Priority: 11.06.2012 JP 2012132207
(71) Applicant: Sony Corporation, Tokyo 108-0075 (JP)
(72) Inventor: HIRAYAMA, Yuichi, Tokyo 108-0075 (JP); OKADA, Satoshi, Tokyo 108-0075 (JP); IKEDA, Tamotsu, Tokyo 108-0075 (JP); KISHIMOTO, Naomichi, Tokyo 108-0075 (JP)
(74) Representative: Witte, Weller & Partner Patentanwälte mbB
(86) International application number: PCT/JP2013/065866
(87) International publication number: WO 2013/187331

(57) **Abstract**

There is provided an electronic device including a composite stream generation unit to generate a composite stream by combining transport stream packets of transport streams, a stream transmission unit to transmit the composite stream to an external device, a processing information output unit to output processing information for processing each transport stream packet of the composite stream according to a transmission timing of each transport stream packet, a processing information delay unit to output the processing information with a delay of an amount of time corresponding to a delay time from reception to transmission of the composite stream at the external device, a stream reception unit to receive the composite stream from the external device, and a processing unit to process each transport stream packet of the composite stream based on the processing information that has been output with the delay and corresponds to each transport stream packet.

## Description

### Technical Field

The present technology relates to an electronic device, a method of transmitting and receiving a stream in an electronic device, a program, a host device, and a method of transmitting and receiving a stream in a host device, and particularly, to an electronic device that combines a plurality of streams into one stream and transmits and receives the stream to and from an external device.

### Background Art

A set of standards (EN 50221) of using conditional access (CA) implemented in a module via a common interface (CI) has been issued and used in order to deal with conditional access of different paths at the time of receiving a television broadcast (see Non-Patent Literature 1 and Non-Patent Literature 2).

### Citation List

### Non-Patent Literature

Non-Patent Literature 1: CI Plus Specification v1.3.1 (2011-09)
Non-Patent Literature 2: DVB-CI EN50221

### Summary of Invention

### Technical Problem

However, according to the set of standards, since there is only one interface of transport streams for input and output which can be used on a common interface (CI), it is necessary to perform time-division multiplexing on TS packets of a plurality of transport streams, make one stream, and then perform transmission with a CAM module.

It is an object of the present technology to enable favorable transmission and reception of a plurality of streams to and from an external device by making one stream from the plurality of streams.

### Solution to Problem

According to the present technology, there is provided an electronic device including a composite stream generation unit configured to generate a composite stream by combining transport stream packets of a plurality of transport streams, a stream transmission unit configured to transmit the generated composite stream to an external device, a processing information output unit configured to output processing information for processing each of the transport stream packets of the composite stream according to a transmission timing of each of the transport stream packets, a processing information delay unit configured to output the output processing information with a delay of an amount of time corresponding to a delay time from reception to transmission of the composite stream at the external device, a stream reception unit configured to receive the composite stream from the external device, and a processing unit configured to process each of the transport stream packets of the received composite stream based on the processing information that has been output with the delay and corresponds to each of the transport stream packets.

In the present technology, transport stream packets (TSPs) of a plurality of transport streams (TSs) are combined by a composite stream generation unit, and a composite stream is generated. The composite stream is transmitted to an external device by a stream transmission unit. For example, the stream transmission unit may transmit the composite stream to the external device through a digital video broadcasting (DVB)-common interface (CI) common interface or a CI+ common interface, and the external device may be a conditional access module (CAM) module that performs a descrambling process.

Processing information for processing the respective TSPs of the composite stream is output by a processing information output unit according to the transmission timings of the TSPs. Also, the output processing information is output by a processing information delay unit with a delay of the amount of time corresponding to the delay time from reception to transmission of the composite stream at the external device.

For example, a delay control unit that controls a delay time at the processing information delay unit based on information on the delay time from reception to transmission of the composite stream at the external device may be further included. In this case, for example, the delay control unit may acquire the information on the delay time from reception to transmission of the composite stream at the external device by performing communication with the external device. In this case, the delay time at the processing information delay unit can be set appropriately for the delay time of the composite stream at the external device.

The composite stream is received by the stream reception unit from the external device. The respective TSPs of the received composite stream are processed by a processing unit based on the processing information corresponding to the TSPs and output with the delay.

In this way, in the present technology, processing information for processing respective TSPs of a composite stream is output with a delay of the amount of time corresponding to the delay time from reception to transmission of the composite stream at an external device, and the respective TSPs of the composite stream received from the external device are processed based on the processing information output with the delay. For this reason, it is possible to appropriately synchronize the respective TSPs of the received composite stream.

In the present technology, the processing information for processing each of the transport stream packets may include time information representing a time position of each of the transport stream packets in an original transport stream of each of the transport stream packets. The processing unit may reconfigure the plurality of transport streams by placing each of the transport stream packets of the received composite stream at a time position in a stream assigned each of the transport stream packets according to the time information corresponding to each of the transport stream packets.

In this case, the processing information for processing each of the transport stream packets may further include stream identification information for identifying the original transport stream of each of the transport stream packets. The processing unit may assign each of the transport stream packets of the received composite stream to the stream according to the stream identification information corresponding to each of the transport stream packets.

In this case, the electronic device may further include an identification information addition unit configured to add stream identification information for identifying the original transport stream to each of the transport stream packets of the generated composite stream, and an identification information acquisition unit configured to acquire the stream identification information from each of the transport stream packets of the received composite stream. The processing unit may assign each of the transport stream packets of the received composite stream to the stream according to the stream identification information acquired from each of the transport stream packets.

In this case, the identification information addition unit may insert the stream identification information in continuity counter fields in headers of the transport stream packets. The processing information for processing each of the transport stream packets may include original values of the continuity counter fields in the headers of the transport stream packets. The processing unit may substitute values of the continuity counter fields in the headers of the respective transport stream packets of the received composite stream for the original values of the continuity counter fields corresponding to the respective transport stream packets.

In the present technology, the processing information for processing each of the transport stream packets may include stream identification information for identifying an original transport stream of each of the transport stream packets. The processing unit may reconfigure the plurality of transport streams by assigning each of the transport stream packets of the received composite stream to a stream according to the stream identification information that has been output with a delay and corresponds to each of the transport stream packets.

In the present technology, the electronic device may further include an identification information addition unit configured to insert stream identification information for identifying an original transport stream in a continuity counter field in a header of each of the transport stream packets of the generated composite stream, and an identification information acquisition unit configured to acquire the stream identification information from each of the transport stream packets of the received composite stream. The processing information for processing the transport stream packets may include an original value of the continuity counter field in the header of each of the transport stream packets. The processing unit may substitute a value of the continuity counter field in the header of each of the transport stream packets of the received composite stream for the original value of the continuity counter field corresponding to each of the transport stream packets, and reconfigures the plurality of transport streams by assigning each of the transport stream packets of the received composite stream to the stream according to the stream identification information acquired from each of the transport stream packets.

According to the present technology, there is provided a host device including a stream transmission unit configured to transmit a composite stream to an external device, the composite stream being obtained by combining packets of a plurality of streams, a processing information delay unit configured to output processing information for processing each of the packets of the composite stream with a delay of an amount of time corresponding to a delay time from reception to transmission of the composite stream at the external device, and a processing unit configured to process each of the packets of the composite stream received from the external device based on the processing information output with the delay.

In the present technology, a composite stream obtained by combining packets of a plurality of streams is transmitted to an external device by a stream transmission unit. For example, the streams may be TSs, and the packets may be TSPs. Also, for example, a stream acquisition unit that acquires the plurality of streams, and a packet selection unit that selects a predetermined packet from each of the plurality of acquired streams may be further included, and the selected packets may be included in the composite stream.

Processing information for processing respective packets of the composite stream is output by a processing information delay unit with a delay of the amount of time corresponding to the delay time from reception to transmission of the composite stream at the external device. Also, the respective packets of the composite stream received from the external device are processed by a processing unit based on the processing information output with the delay.

For example, when the processing information is stream identification information for identifying original streams of the respective packets, the respective packets are assigned by the processing unit to the corresponding streams according to the stream identification information. Also, for example, when the processing information is time information representing the time positions of the respective packets in the original streams, the output timings of the respective packets in the respective streams after the assignment process are adjusted by the processing unit based on the time information.

In this way, in the present technology, processing information for processing respective packets of a composite stream is output with a delay of the amount of time corresponding to the delay time from reception to transmission of the composite stream at an external device, and the respective packets of the composite stream received from the external device are processed based on the processing information output with the delay. For this reason, it is possible to appropriately synchronize the respective packets of the received composite stream.

### Advantageous Effects of Invention

According to the present technology, it is possible to favorably transmit and receive a plurality of streams to and from an external device by making one stream from the plurality of streams.

### Brief Description of Drawings

[FIG. 1] FIG. 1 is a block diagram showing a configuration example of a digital broadcast reception system as an embodiment.
[FIG. 2] FIG. 2 is a block diagram showing a detailed configuration example of a common interface (CI) controller constituting the reception system.
[FIG. 3] FIG. 3 is a diagram showing a configuration example of a multiplex (MUX) unit constituting the CI controller.
[FIG. 4] FIG. 4 is a diagram showing a configuration example of a demultiplex (DEMUX) unit constituting the CI controller.
[FIG. 5] FIG. 5 is a diagram showing a configuration example of packet identifier (PID) packets of each transport stream (TS) supplied to a local time stamp (LTS) adder and an example of non-unnecessary PID packets after PID data packets other than those of a selected service channel are removed.
[FIG. 6] FIG. 6 is a diagram for describing a process of the MUX unit.
[FIG. 7] FIG. 7 is a diagram for describing a process of the DEMUX unit.
[FIG. 8] FIG. 8 is a flowchart illustrating an example of a processing procedure of the CI controller when PID packets of respective TSs are combined and transmitted to a conditional access module (CAM) module as one stream.
[FIG. 9] FIG. 9 is a diagram illustrating an example of a processing procedure of the CI controller when the combined PID packets of the respective TSs are received from the CAM module.
[FIG. 10] FIG. 10 is a block diagram showing an example of the detailed constitutions of a first-in first-out (FIFO) unit and the DEMUX unit.
[FIG. 11] FIG. 11 is a timing diagram of signals of respective units at the FIFO unit.
[FIG. 12] FIG. 12 is a timing diagram of signals of respective units at the FIFO unit and the DEMUX unit.
[FIG. 13] FIG. 13 is a block diagram showing another example of the detailed constitutions of the FIFO unit and the DEMUX unit.
[FIG. 14] FIG. 14 is a timing diagram of signals of respective units at the FIFO unit.
[FIG. 15] FIG. 15 is a timing diagram of signals of respective units at the FIFO unit and the DEMUX unit.
[FIG. 16] FIG. 16 is a diagram showing various patterns that provide information, such as a local TS identifier (LTSID), an LTS, a continuity counter (CC), and the like, for processing respective PID packets in a received composite stream.
[FIG. 17] FIG. 17 is a diagram showing the structure of a TS packet (TSP).
[FIG. 18] FIG. 18 is a block diagram showing another detailed configuration example of the CI controller constituting the reception system.
[FIG. 19] FIG. 19 is a diagram showing a configuration example of a MUX unit constituting the CI controller.
[FIG. 20] FIG. 20 is a diagram showing a configuration example of a DEMUX unit constituting the CI controller.
[FIG. 21] FIG. 21 is a diagram for describing a method of finding an LTS (relative time) corresponding to each PID packet.
[FIG. 22] FIG. 22 is a diagram for describing timing adjustment using an LTS (relative time) upon reconfiguration.

### Description of Embodiments

Hereinafter, modes (hereinafter referred to as "embodiments") for carrying out the present technology will be described. The description will proceed in the following order.
1. Embodiment
2. Modified example

### <1. Embodiment>

### [Configuration example of digital broadcast reception system]

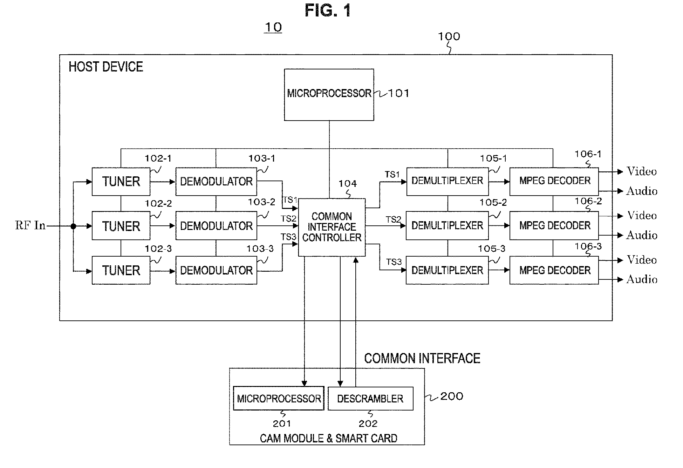

FIG. 1 shows a configuration example of a reception system 10 as an embodiment of the present technology. The reception system 10 is constituted of a host device 100 and a conditional access module (CAM) module 200. The host device 100 is an electronic apparatus, such as a television receiver set (TV set), a set-top box, or the like.

The host device 100 includes a microprocessor 101, tuners 102-1, 102-2, and 102-3, and demodulators 103-1, 103-2, and 103-3. Also, the host device 100 includes a common interface (CI) controller 104, and demultiplexers 105-1, 105-2, and 105-3. In addition, the host device 100 includes Moving Picture Experts Group (MPEG) decoders 106-1, 106-2, and 106-3.

The microprocessor 101 controls operation of each unit of the host device 100. The tuners 102-1, 102-2, and 102-3 receive radio frequency (RF) modulation signals of transport streams (TSs) TS1, TS2, and TS3 broadcast by a broadcasting station, respectively. Also, the tuners 102-1, 102-2, and 102-3 down-convert the RF modulation signals into intermediate frequencies (IFs) and output IF modulation signals in order to input the RF modulation signals to the demodulators 103-1, 103-2, and 103-3, respectively. The demodulators 103-1, 103-2, and 103-3 demodulate the down-converted IF modulation signals and obtain the TSs TS1, TS2, and TS3, respectively.

The CI controller 104 generates a composite stream by combining the TSs TS1, TS2, and TS3 obtained by the demodulators 103-1, 103-2, and 103-3, and exchanges, that is, transmits and receives, the composite stream with the CAM module 200. The CI controller 104 and the CAM module 200 are connected by a digital video broadcasting (DVB)-common interface (CI) common interface or a CI+ common interface.

Each TS includes packet identifier (PID) packets (transport stream packets (TSPs)) of a plurality of service channels in a time-division manner. The CI controller 104 excludes PID data packets of unselected service channels from each TS to perform the exchange. In this way, a reduction in a transmission bit rate is attempted. The detailed configuration of the CI controller 104 will be additionally described later.

The demultiplexers 105-1, 105-2, and 105-3 extract PID data packets of a selected service channel from the TSs TS1, TS2, and TS3 obtained by the CI controller 104, respectively. The PID data packets are video and audio PID data packets. The MPEG decoders 106-1, 106-2, and 106-3 decode elementary streams consisting of the PID data packets extracted by the demultiplexers 105-1, 105-2, and 105-3, respectively, thereby obtaining video data and audio data.

The CAM module 200 is an attachment device for performing a descrambling process which fits into a common interface connector of the host device 100. The CAM module 200 is used by inserting a smart card such as a magnetic card or an IC card in which subscriber information, subscription contract period information, and the like are recorded into the CAM module 200.

The CAM module 200 includes a microprocessor 201 and a descrambling 202. The CAM module 200 receives PID packets sent from the CI controller 104 of the host device 100 through a CI, and performs a descrambling process on the received PID packets. Subsequently, the CAM module 200 transmits each PID to the CI controller 104 of the host device 100.

Operation of the reception system 10 shown in FIG. 1 is briefly described. RF modulation signals of the TSs TS1, TS2, and TS3 sent from the broadcasting station are received by the tuners 102-1, 102-2, and 102-3, respectively. At the tuners 102-1, 102-2, and 102-3, the RF modulation signals are down-converted into IFs and supplied to the demodulators 103-1, 103-2, and 103-3. At the demodulators 103-1, 103-2, and 103-3, IF modulation signals down-converted into the IFs are demodulated, so that the baseband TSs TS1, TS2, and TS3 are obtained. The TSs TS1, TS2, and TS3 are supplied to the CI controller 104.

At the CI controller 104, PID packets of the TSs TS1, TS2, and TS3 supplied from the demodulators 103-1, 103-2, and 103-3 are combined, and the composite stream is generated. The PID packets constituting the composite stream are transmitted in sequence from the CI controller 104 to the CAM module 200 through the CI. At this time, PID data packets of unselected service channels are removed from each TS.

At the CAM module 200, the composite stream sent from the CI controller 104 of the host device 100 is received through the CI, and a descrambling process is performed on each PID packet. Subsequently, the composite stream is transmitted from the CAM module 200 to the CI controller 104 of the host device 100 through the CI.

At the CI controller 104, the composite stream sent from CAM module 200 is received through the CI. Also, at the CI controller 104, the respective PID packets included in the composite stream are assigned to respective streams, and the TSs TS1, TS2, and TS3 are reconfigured. The reconfigured TSs TS1, TS2, and TS3 are supplied to the demultiplexers 105-1, 105-2, and 105-3, respectively.

At the demultiplexers 105-1, 105-2, and 105-3, PID data packets of a selected service channel are extracted from the TSs TS1, TS2, and TS3 supplied from the CI controller 104, respectively. Video and audio PID data packets extracted at the demultiplexers 105-1, 105-2, and 105-3 are supplied to the MPEG decoders 106-1, 106-2, and 106-3, respectively.

At each of the MPEG decoders 106-1, 106-2, and 106-3, a demodulation process is performed on video and audio elementary streams consisting of video and audio PID data packets. Also, video data and audio data of the selected service channel is output from each of the MPEG decoders 106-1, 106-2, and 106-3.

### [Configuration example of CI controller]

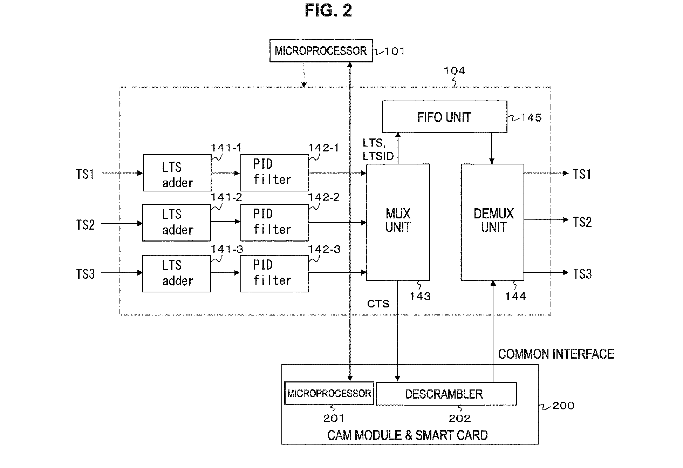

Next, the configuration of the CI controller 104 will be described. FIG. 2 shows a detailed configuration example of the controller 104. The controller 104 includes local time stamp (LTS) adders 141-1, 141-2, and 141-3, and PID filters 142-1, 142-2, and 142-3. Also, the controller 104 includes a multiplex (MUX) unit 143, a demultiplex (DEMUX) unit 144, and a first-in first-out (FIFO) unit 145.

The LTS adders 141-1, 141-2, and 141-3 add LTSs corresponding to input times to the respective PID packets (TSPs) of the input TSs TS1, TS2, and TS3, respectively. These LTSs are obtained based on a clock generated by, for example, a free-running clock generator or a clock generator that has been subjected to program clock reference (PCR) recovery.

The PID filters 142-1, 142-2, and 142-3 perform filtering to exclude PID data packets of unselected service channels from the TSs TS1, TS2, and TS3 respectively. Through the filtering, a reduction in a transmission bit rate of the composite stream obtained by combining the PID data packets of the TSs TS1, TS2, and TS3 is attempted.

The MUX unit 143 generates one stream, that is, a composite stream composition time stamp (CTS), by combining the PID packets of the TSs TS1, TS2, and TS3. Also, the MUX unit 143 sequentially transmits the PID packets of the composite stream CTS to the CAM module 200 through the CI.

Also, the MUX unit 143 outputs LTSs and local TS identifiers (LTSIDs) corresponding to the respective PID packets of the composite stream CTS according to the transmission timings of the respective PID packets of the composite stream CTS transmitted to the CAM module 200, and supplies the LTSs and the LTSIDs to the FIFO unit 145.

Here, an LTS is time information representing a time position of each PID packet in an original TS, and for example, the LTSs added by the LTS adders 141-1, 141-2, and 141-3 as described above are used separately. Also, an LTSID is stream identification information for identifying the original TS of each PID packet, and is generated and used when a composition stream CTS is generated.

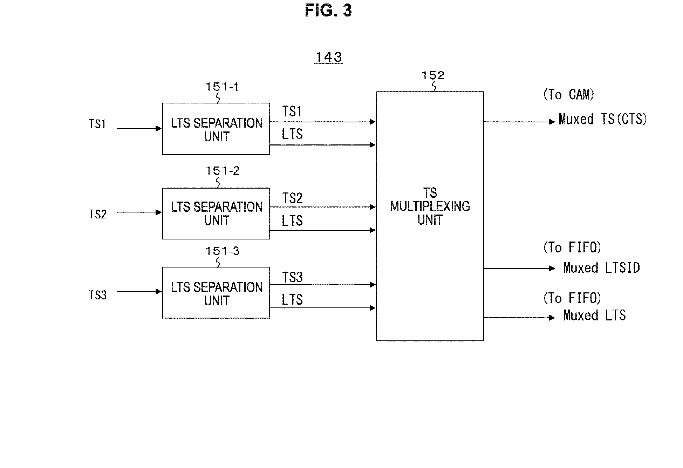

FIG. 3 shows a configuration example of the MUX unit 143. The MUX unit 143 includes LTS separation units 151-1, 151-2, and 151-3, and a TS multiplexing unit 152. The LTS separation units 151-1, 151-2, and 151-3 separate the LTSs from the respective PID packets of the TSs TS1, TS2, and TS3, respectively. Then, the LTS separation units 151-1, 151-2, and 151-3 output the TSs TS1, TS2, and TS3 consisting of the respective PID packets to which no LTSs are added, and also output the LTSs that have been added to the respective PID packets.

The TS multiplexing unit 152 generates a composite stream CTS by combining the respective PID packets of the TSs TS1, TS2, and TS3 respectively output from the LTS separation units 151-1, 151-2, and 151-3. For example, the respective PID packets of the TSs TS1, TS2, and TS3 are temporarily stored in dual-port memories which are not shown in the drawing, taken out in order of time, and combined. The TS multiplexing unit 152 sequentially transmits the respective PID packets of the composite stream CTS to the CAM module 200 through the CI.

Also, the TS multiplexing unit 152 sequentially outputs the LTSs corresponding to the respective PID packets using the LTSs output from the LTS separation units 151-1, 151-2, and 151-3 according to the transmission timings of the respective PID packets, and transmits the output LTSs to the FIFO unit 145. Further, the TS multiplexing unit 152 sequentially generates the LTSIDs for identifying original TSs of the respective PID packets according to the transmission timings of the respective PID packets, and transmits the LTSIDs to the FIFO unit 145.

Referring back to FIG. 2, the FIFO unit 145 sequentially outputs the LTSs and the LTSIDs output from the MUX unit 143 with a delay of the amount of time corresponding to the delay time from reception to transmission of the composite stream CTS at the CAM module 200. Although it will be described in detail later, the delay time at the FIFO unit 145 and the delay time at the CAM module 200 are not necessarily perfect, and jitter within a certain range is allowed in the delay time at the CAM module 200. The delay time at the FIFO unit 145 is controlled by the microprocessor 101.

The microprocessor 101 controls the delay time at the FIFO unit 145, e.g., the number of stages of a flip-flop, based on information on the aforementioned delay time at the CAM module 200. The information on the delay time at the CAM module 200 may be, for example, given by a manual input of a user or automatically acquired by performing communication with the microprocessor 201 of the CAM module 200.

The DEMUX unit 144 receives the composite stream CTS transmitted from the CAM module 200. Then, the DEMUX unit 144 processes the respective PID packets of the received composite stream based on the LTSs and the LTSIDs corresponding to the respective PID packets and output with the delay from the FIFO 145.

In other words, the DEMUX unit 144 assigns the respective PID packets to the respective streams according to the LTSIDs. Also, the DEMUX unit 144 places the respective PID packets at time positions in the respective assigned streams according to the LTSs, thereby reconfiguring the TSs TS1, TS2, and TS3.

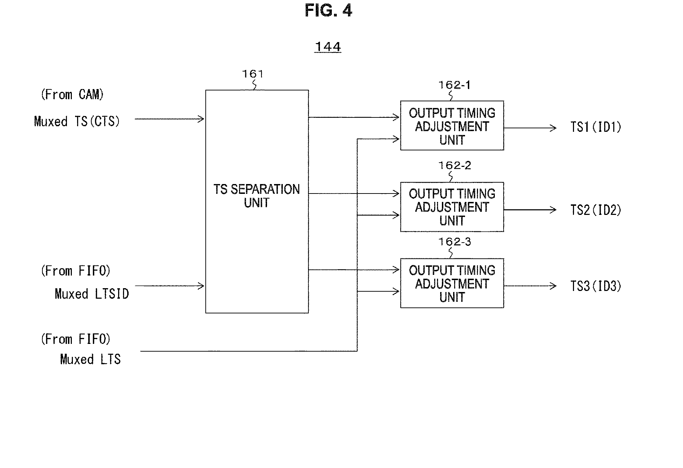

FIG. 4 shows a configuration example of the DEMUX unit 144. The DEMUX unit 144 includes a TS separation unit 161, and output timing adjustment units 162-1, 162-2, and 162-3. The TS separation unit 161 assigns the respective PID packets of the composite stream received from the CAM module 200 to the respective streams based on the LTSIDs corresponding to the respective PID packets and output with a delay from the FIFO unit 145.

The output timing adjustment units 162-1, 162-2, and 162-3 place the respective PID packets at time positions in the respective streams according to the LTSs corresponding to the respective PID packets. Then, the output timing adjustment units 162-1, 162-2, and 162-3 reconfigure the TSs TA1, TS2, and TS3, respectively.

Operation of the CI controller 104 shown in FIG. 2 is described. The TSs TS1, TS2, and TS3 supplied from the demodulators 103-1, 103-2, and 103-3 (see FIG. 1) are supplied to the LTS adders 141-1, 141-2, and 141-3, respectively. At the LTS adders 141-1, 141-2, and 141-3, the LTSs corresponding to the input times are added to the respective PID packets (TSPs) of the input TSs TS1, TS2, and TS3, respectively.

The TSs TS1, TS2, and TS3 in which the LTSs are added to the respective PID packets are supplied to the PID filters 142-1, 142-2, and 142-3, respectively. At the PID filters 142-1, 142-2, and 142-3, filtering is performed to exclude PID data packets of unselected service channels from the TSs TS1, TS2, and TS3, respectively.

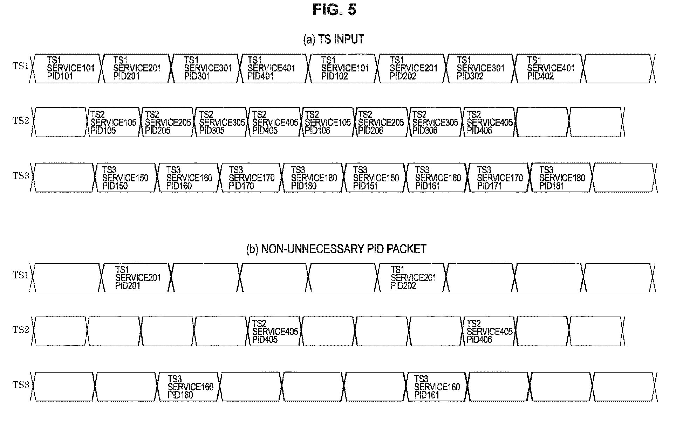

FIG. 5(a) shows a configuration example of PID packets of the TSs TS1, TS2, and TS3 supplied to the LTS adders 141-1, 141-2, and 141-3. FIG. 5(b) shows an example of PID packets (non-unnecessary PID packets) remaining after filtering is performed on the input of FIG. 5(a) at the PID filters 142-1, 142-2, and 142-3.

Referring back to FIG. 2, the TSs TS1, TS2, and TS3 after filtering are supplied to the MUX unit 143. At the MUX unit 143, respective PID packets of the TSs TS1, TS2, and TS3 from which LTSs are removed are combined, so that the composite stream CTS is generated. From the MUX unit 143, the respective PID packets of the composite stream CTS are transmitted in sequence to the CAM module 200 through the CI.

Also, from the MUX unit 143, LTSs and LTSIDs corresponding to the respective PID packets are output in sequence according to the transmission timings of the respective PID packets of the composite stream CTS transmitted to the CAM module 200. The LTSs and LTSIDs output in sequence from the MUX unit 143 in this way are supplied to the FIFO unit 145.

As described above, an LTS is time information representing a time position of each PID data packet in the original TS of the PID data packet, and for example, the LTSs added by the LTS adders 141-1, 141-2, and 141-3 as described above are used separately. Also, as described above, an LTSID is stream identification information for identifying the original TS of each PID packet, and is generated when a composition stream CTS is generated.

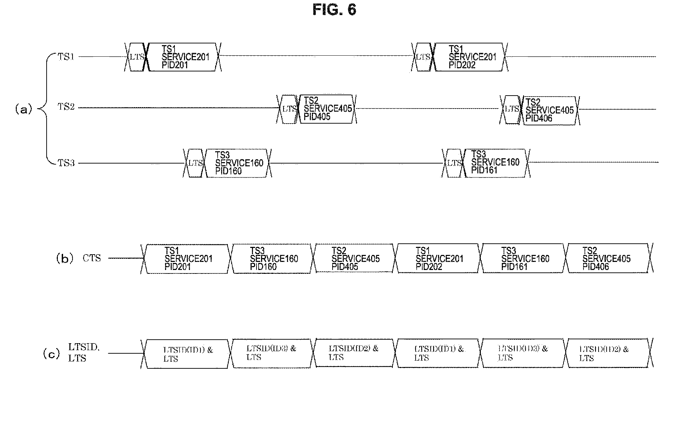

FIG. 6(a) shows an example of respective PID packets of the respective TSs TS1, TS2, and TS3 supplied from the PID filters 142-1, 142-2, and 142-3 to the MUX unit 143. An LTS is added to each PID packet. FIG. 6(b) shows an example of the sequence of the respective PID packets of the composite stream CTS output from the MUX unit 143.

Also, FIG. 6(c) shows an example of LTSIDs and LTSs corresponding to the respective PID packets of the composite stream CTS output from the MUX unit 143. Here, an LTSID ID1 is an LTSID indicating that an original TS is the TS TS1. Also, an LTSID ID2 is an LTSID indicating that an original TS is the TS TS2. Also, an LTSID ID3 is an LTSID indicating that an original TS is the TS TS3.

As described above, the LTSs and the LTSIDs sequentially output from the MUX unit 143 are supplied to the FIFO unit 145. The LTSs and the ITSIDs output in sequence from the MUX unit 143 are output from the FIFO unit 145 with a delay of the amount of time corresponding to the delay time from reception to transmission of the composite stream CTS at the CAM module 200.

The LTSs and the ITSIDs output in sequence from the FIFO unit 145 are supplied to the DEMUX unit 144. At the DEMUX unit 144, the composite stream CTS sent from the CAM module 200 through the CI is received. Since the delay time of the FIFO unit 145 is set as described above, the LTSs and the ITSIDs corresponding to the respective PID packets of the composite stream CTS are supplied from the FIFO unit 145 to the DEMUX unit 144 according to the reception timings of the respective PID packets.

At the DEMUX unit 144, the PID packets of the composite stream CTS are assigned to the respective streams according to the LTSIDs corresponding to the respective PID packets. Then, at the DEMUX unit 144, output timings are adjusted so that the respective PID packets are placed at the time positions in the respective assigned streams according to the LTSs corresponding to the respective PID packets, and the reconfigured TSs TS1, TS2, and TS3 are obtained.

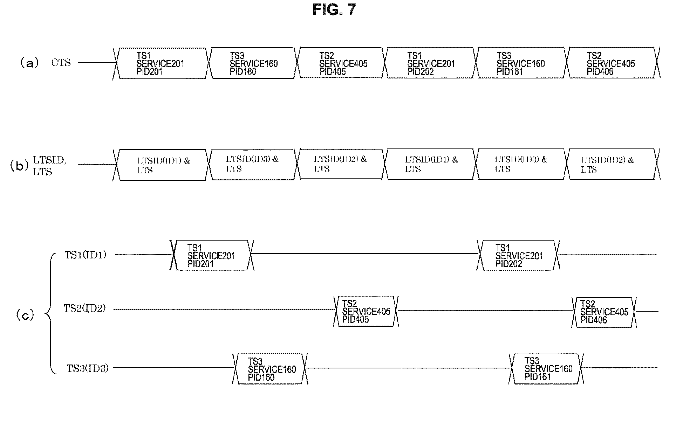

FIG. 7(a) shows an example of the respective PID packets of the composite stream CTS input from the CAM module 200 to the DEMUX unit 144 through the CI (corresponding to FIG. 6(b)). Also, FIG. 7(b) shows an example of the LTSs and the ITSIDs input in sequence from the FIFO unit 145 to the DEMUX unit 144 according to input timings of the respective PID packets of the composite stream CTS (corresponding to FIG. 6(c)). Further, FIG. 7(c) shows an example of the respective PID packets of the reconfigured TSs TS1, TS2, and TS3 output from the DEMUX unit 144.

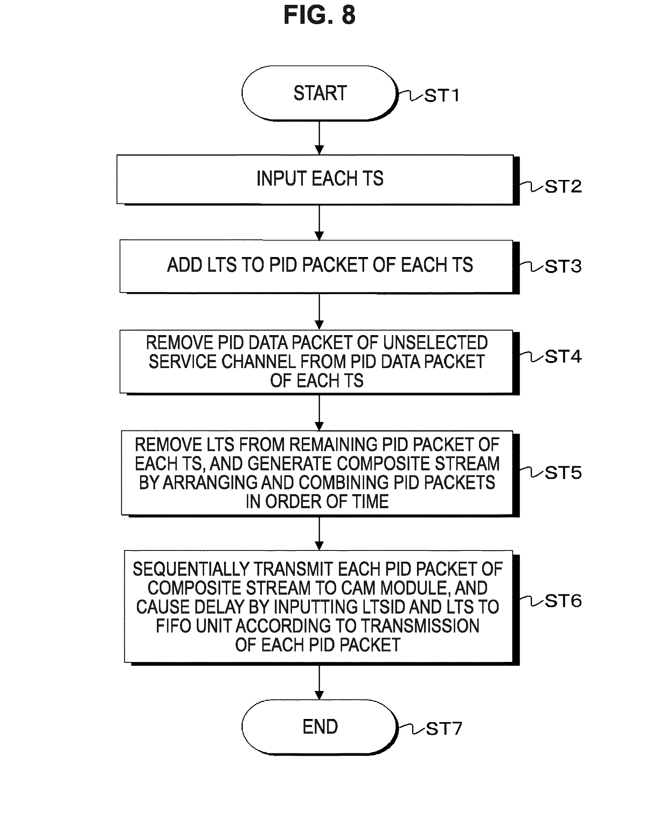

The flowchart of FIG. 8 illustrates an example of a processing procedure when the CI controller 104 generates the composite stream CTS by combining the respective PID packets of the TSs TS1, TS2, and TS3 and transmits the composite stream CTS to the CAM module 200.

The controller 104 begins processing in step ST1, and then performs a process of step ST2. In step ST2, the controller 104 inputs the TSs TS1, TS2, and TS3. Then, in step ST3, the controller 104 adds LTSs to PID packets of each TS.

Next, in step ST4, the controller 104 removes PID data packets of unselected service channels of each TS. Then, in step ST5, the controller 104 generates a composite stream by arranging and combining all remaining PID packets (PID packets after LTS removal) in order of time.

Next, in step ST6, the controller 104 sequentially transmits the respective PID packets of a composite stream CTS to the CAM module 200 at a clock rate necessary for continuous transmission. Also, in this step ST6, the controller 104 inputs LTSIDs and LTSs corresponding to transmission of the respective PID packets to the FIFO unit 145, thereby causing the LTSIDs and the LTSs to be delayed. After the process of step ST6, the processing is finished in step ST7.

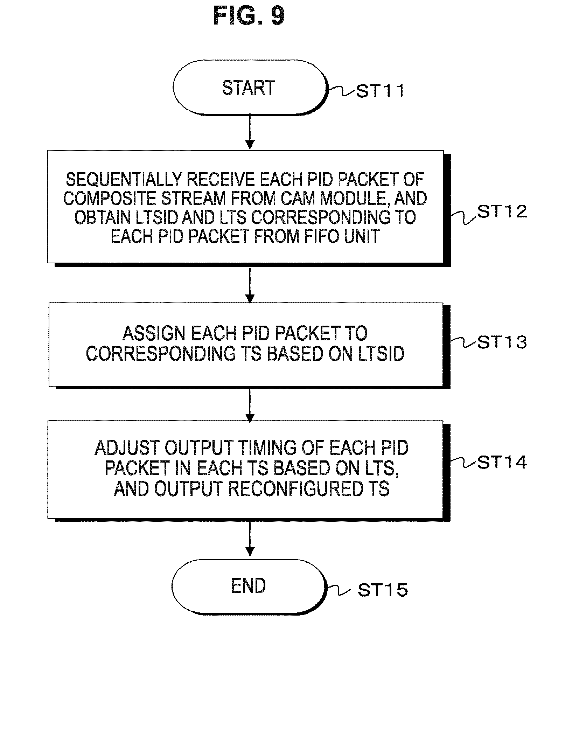

The flowchart of FIG. 9 illustrates an example of a processing procedure when the CI controller 104 receives the composite stream CTS from the CAM module 200 and reconfigures the TSs TS1, TS2, and TS3.

In step ST11, the controller 104 begins processing, and then performs a process of step ST12. In step ST12, the controller 104 sequentially receives the respective PID packets of the composite stream CTS from the CAM module 200. Also, the controller 104 obtains the LTSIDs and the LTSs corresponding to the respective PID packets from the FIFO unit 145.

Next, in step ST13, the controller 104 assigns the respective PID packets of the composite stream CTS to the corresponding streams based on the LTSIDs corresponding to the respective PID packets. In step ST14, the controller 104 adjusts output timings so that the respective PID packets are placed at the time positions in the respective streams according to the LTSs corresponding to the respective PID packets, outputs the respective PID packets, and outputs the reconfigured TSs TS1, TS2, and TS3. After the process of step ST14, the processing is finished in step ST15.

The controller 104 performs the transmission process illustrated in the flowchart of FIG. 8 described above and the reception process illustrated in the flowchart of FIG. 9 described above in parallel with each other, and periodically repeats each of the processes.

### [Detailed configurations of FIFO unit and DEMUX unit]

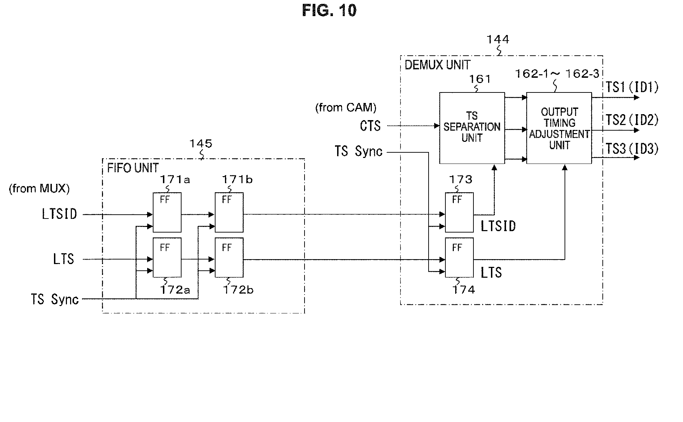

FIG. 10 shows an example of the detailed constitutions of the FIFO unit 145 and the DEMUX unit 144. In this example, a one-packet delay occurs at the CAM module 200. Strictly speaking, in this example, jitter within a delay range of 1.0 packet to 2.0 packets is allowed at the CAM module 200.

The FIFO unit 145 includes a series circuit of two flip-flops (latch circuits) 171a and 171b as LTSID delay units, and also includes a series circuit of two flip-flops (latch circuits) 172a and 172b as LTS delay units. The TS sync signal TS Sync is input as a latch signal from the MUX unit 143 to each flip-flop. Due to such a configuration of the FIFO unit 145, the LTSIDs and the LTSs input from the MUX unit 143 are continuously output from the FIFO unit 145 with a one-packet delay to a two-packet delay.

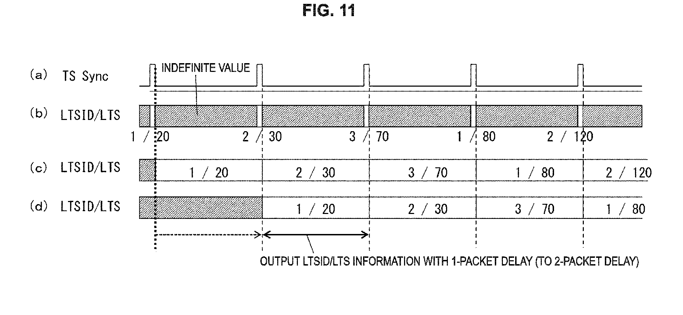

FIG. 11 is a timing diagram of signals of respective units at the FIFO unit 145. FIG. 11(a) shows the TS sync signal TS Sync input as a latch signal from the MUX unit 143. Also, FIG. 11(b) shows an example of LTSIDs and LTSs input from the MUX unit 143 to the FIFO unit 145, i.e., to the flip-flops 171a and 172a. In "n/m," n denotes an LTSID, and m denotes an LTS. This is the same in the following drawings.

The LTSIDs and the LTSs input to the flip-flops 171a and 172a are latched at a timing of a latch signal and become outputs of the flip-flops 171a and 172a. FIG. 11(c) shows the outputs of the flip-flops 171a and 172a, i.e., LTSIDs and LTSs input to the flip-flops 171b and 172b.

Also, the LTSIDs and the LTSs input to the flip-flops 171b and 172b are latched at a timing of the latch signal and become outputs of the flip-flops 171b and 172b. FIG. 11(d) shows the outputs of the flip-flops 171b and 172b, i.e., LTSIDs and LTSs output from the FIFO unit 145.

In this way, the LTSIDs and the LTSs input from the MUX unit 143 are continuously output from the FIFO unit 145 with a one-packet delay to a two-packet delay. In FIG. 11, hatched areas indicate that no values are specified.

Referring back to FIG. 10, the DEMUX unit 144 includes two flip-flops (latch circuits) 173 and 174 in addition to the TS separation unit 161 and the output timing adjustment units 162-1, 162-2, and 162-3. The TS sync signal TS Sync synchronized with the respective PID packets of the composite stream CTS supplied from the CAM module 200 is input to each flip-flop as a latch signal.

The flip-flop 173 latches the LTSIDs supplied from the FIFO unit 145, and outputs LTSIDs corresponding to the respective PID packets of the composite stream CTS received from the CAM module 200 in synchronization with the PID packets. Also, the flip-flop 174 latches the LTSs supplied from the FIFO unit 145, and outputs LTSs corresponding to the respective PID packets of the composite stream CTS received from the CAM module 200 in synchronization with the PID packets.

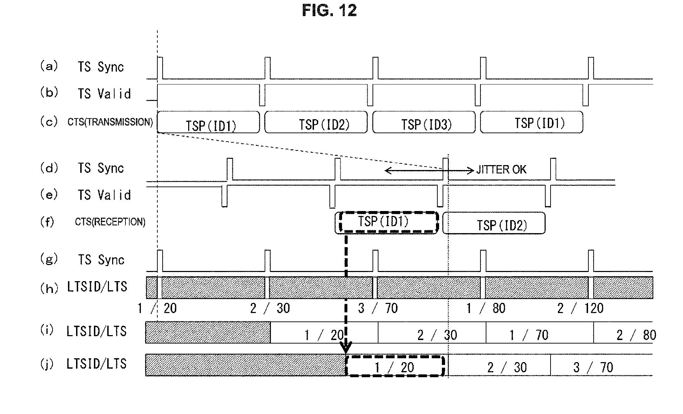

FIG. 12 shows a timing diagram of signals of respective units at the FIFO unit 145 and the DEMUX unit 144. Like FIG. 11(a), FIG. 12(g) shows the TS sync signal TS Sync input as a latch signal from the MUX unit 143. Like FIG. 11(b), FIG. 12(h) shows an example of LTSIDs and LTSs input from the MUX unit 143 to the FIFO unit 145. Like FIG. 11(d), FIG. 12(i) shows LTSIDs and LTSs output from the FIFO unit 145.

FIG. 12(c) shows an example of the respective PID packets (TSPs) of the composite stream CTS transmitted from the MUX unit 143 to the CAM module 200. FIG. 12(a) shows the TS sync signal TS Sync simultaneously transmitted with the composite stream CTS from the MUX unit 143 to the CAM module 200. FIG. 12(b) shows a TS valid signal TS Valid simultaneously transmitted with the composite stream CTS from the MUX unit 143 to the CAM module 200.

Also, FIG. 12(f) shows the respective PID packets (TSPs) of the composite stream CTS received at the DEMUX unit 144 from the CAM module 200. The composite stream CTS is a composite stream CTS that is transmitted from the MUX unit 143 to the CAM module 200 and delayed for the delay time from reception to transmission at the CAM module 200.

In this example, as mentioned above, a one-packet delay occurs at the CAM module 200, and jitter within a delay range of 1.0 packet to 2.0 packets is allowed at the CAM module 200. In an example shown in FIG. 12(f), a delay of, for example, 1.6 packets, which is longer than a 1.0-packet delay, occurs in each PID packet of the composite stream CTS. FIG. 12(d) shows the TS sync signal TS Sync that is simultaneously received with the composite stream CTS from the CAM module 200 at the DEMUX unit 144. Also, FIG. 12(e) shows the TS valid signal TS Valid that is simultaneously received with the composite stream CTS from the CAM module 200 at the DEMUX unit 144.

The LTSIDs and the LTSs input from the FIFO unit 145 to the flip-flops 173 and 174 of the DEMUX unit 144 are latched at a timing of a latch signal and become outputs of the flip-flops 173 and 174. For this reason, the LTSIDs and the LTSs output from the flip-flops 173 and 174 correspond to the respective PID packets of the composite stream CTS received from the CAM module 200 and also are synchronized with the respective PID packets.

FIG. 12(j) shows the LTSIDs and the LTSs output from the flip-flops 173 and 174. As seen from this drawing, the LTSIDs and the LTSs output from the flip-flops 173 and 174 correspond to the respective PID packets of the composite stream CTS received from the CAM module 200 (see FIG. 12(f)) and also are synchronized with the respective PID packets. Ultimately, due to the latch process at the flip-flops 173 and 174, the jitter of a delay time at the CAM module 200 is absorbed.

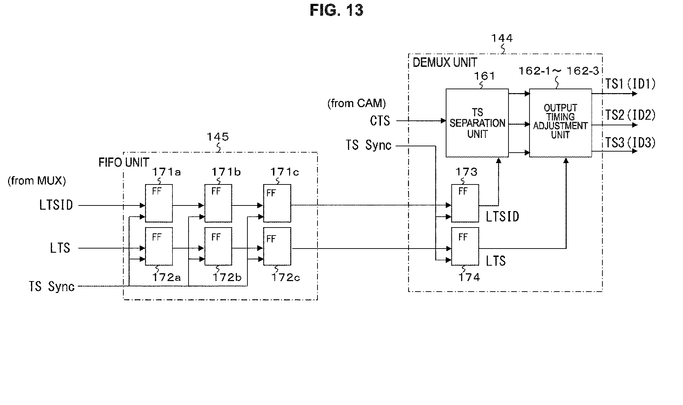

FIG. 13 shows another example of the detailed constitutions of the FIFO unit 145 and the DEMUX unit 144. In this example, a two-packet delay occurs at the CAM module 200. Strictly speaking, in this example, jitter within a delay range of 2.0 packets to 3.0 packets is allowed at the CAM module 200.

The FIFO unit 145 includes a series circuit of three flip-flops (latch circuits) 171a, 171b, and 171c as LTSID delay units, and also includes a series circuit of three flip-flops (latch circuits) 172a, 172b, and 172c as LTS delay units. The TS sync signal TS Sync is input to each flip-flop as a latch signal from the MUX unit 143. Due to such a configuration of the FIFO unit 145, the LTSIDs and the LTSs input from the MUX unit 143 are continuously output from the FIFO unit 145 with a two-packet delay to a three-packet delay.

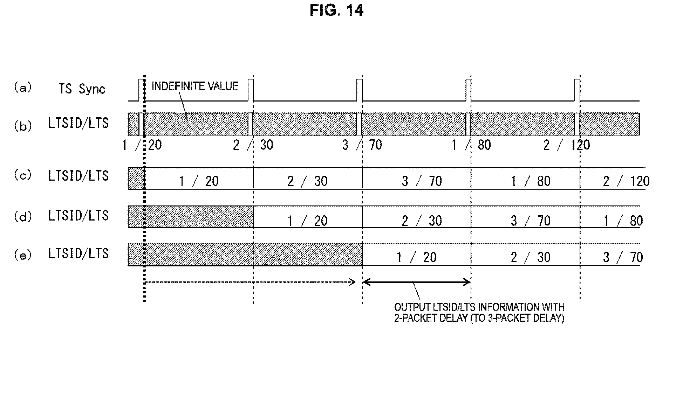

FIG. 14 shows a timing diagram of signals of respective units at the FIFO unit 145. FIG. 14(a) shows the TS sync signal TS Sync input as a latch signal from the MUX unit 143. Also, FIG. 14(b) shows an example of LTSIDs and LTSs input from the MUX unit 143 to the FIFO unit 145, i.e., to the flip-flops 171a and 172a.

The LTSIDs and the LTSs input to the flip-flops 171a and 172a are latched at a timing of a latch signal and become outputs of the flip-flops 171a and 172a. FIG. 14(c) shows the outputs of the flip-flops 171a and 172a, i.e., LTSIDs and LTSs input to the flip-flops 171b and 172b.

Also, the LTSIDs and the LTSs input to the flip-flops 171b and 172b are latched at a timing of the latch signal and become outputs of the flip-flops 171b and 172b. FIG. 14(d) shows the outputs of the flip-flops 171b and 172b, i.e., LTSIDs and LTSs input to the flip-flops 171c and 172c.

Further, the LTSIDs and the LTSs input to the flip-flops 171c and 172c are latched at a timing of the latch signal and become outputs of the flip-flops 171c and 172c. FIG. 14(e) shows the outputs of the flip-flops 171c and 172c, i.e., LTSIDs and LTSs output from the FIFO unit 145.

In this way, the LTSIDs and the LTSs input from the MUX unit 143 are continuously output from the FIFO unit 145 with a two-packet delay to a three-packet delay. In FIG. 14, hatched areas indicate that no values are specified.

Referring back to FIG. 13, the DEMUX unit 144 includes two flip-flops (latch circuits) 173 and 174 in addition to the TS separation unit 161 and the output timing adjustment units 162-1, 162-2, and 162-3. The TS sync signal TS Sync synchronized with the respective PID packets of the composite stream CTS supplied from the CAM module 200 is input to each flip-flop as a latch signal.

The flip-flop 173 latches the LTSIDs supplied from the FIFO unit 145, and outputs LTSIDs corresponding to the respective PID packets of the composite stream CTS received from the CAM module 200 in synchronization with the PID packets. Also, the flip-flop 174 latches the LTSs supplied from the FIFO unit 145, and outputs LTSs corresponding to the respective PID packets of the composite stream CTS received from the CAM module 200 in synchronization with the PID packets.

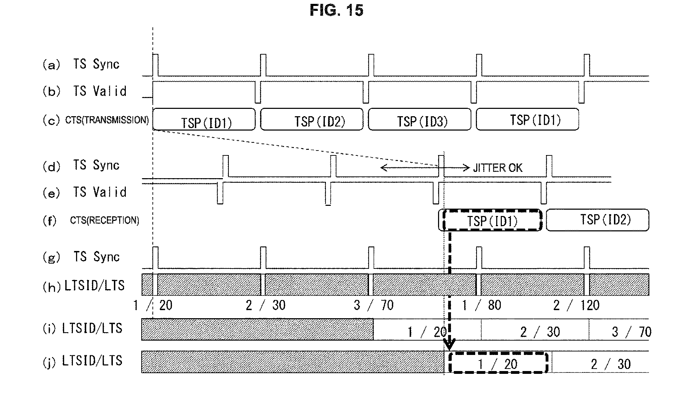

FIG. 15 shows a timing diagram of signals of respective units at the FIFO unit 145 and the DEMUX unit 144. Like FIG. 14(a), FIG. 15(g) shows the TS sync signal TS Sync input as a latch signal from the MUX unit 143. Like FIG. 14(b), FIG. 15(h) shows an example of LTSIDs and LTSs input from the MUX unit 143 to the FIFO unit 145. Like FIG. 14(e), FIG. 15(i) shows LTSIDs and LTSs output from the FIFO unit 145.

FIG. 15(c) shows an example of the respective PID packets (TSPs) of the composite stream CTS transmitted from the MUX unit 143 to the CAM module 200. FIG. 15(a) shows the TS sync signal TS Sync simultaneously transmitted with the composite stream CTS from the MUX unit 143 to the CAM module 200. FIG. 15(b) shows a TS valid signal TS Valid simultaneously transmitted with the composite stream CTS from the MUX unit 143 to the CAM module 200.

Also, FIG. 15(f) shows the respective PID packets (TSPs) of the composite stream CTS received at the DEMUX unit 144 from the CAM module 200. The composite stream CTS is a composite stream CTS that is transmitted from the MUX unit 143 to the CAM module 200 and delayed for the delay time from reception to transmission at the CAM module 200.

In this example, as mentioned above, a two-packet delay occurs at the CAM module 200, and jitter within a delay range of 2.0 packets to 3.0 packets is allowed at the CAM module 200. In an example shown in FIG. 15(f), a delay of, for example, 2.6 packets, which is longer than a 2.0-packet delay, occurs in each PID packet of the composite stream CTS. FIG. 15(d) shows the TS sync signal TS Sync that is simultaneously received with the composite stream CTS from the CAM module 200 at the DEMUX unit 144. Also, FIG. 15(e) shows the TS valid signal TS Valid that is simultaneously received with the composite stream CTS from the CAM module 200 at the DEMUX unit 144.

The LTSIDs and the LTSs input from the FIFO unit 145 to the flip-flops 173 and 174 of the DEMUX unit 144 are latched at a timing of a latch signal and become outputs of the flip-flops 173 and 174. For this reason, the LTSIDs and the LTSs output from the flip-flops 173 and 174 correspond to the respective PID packets of the composite stream CTS received from the CAM module 200 and also are synchronized with the respective PID packets.

FIG. 15(j) shows the LTSIDs and the LTSs output from the flip-flops 173 and 174. As seen from this drawing, the LTSIDs and the LTSs output from the flip-flops 173 and 174 correspond to the respective PID packets of the composite stream CTS received from the CAM module 200 (see FIG. 15(f)) and also are synchronized with the respective PID packets. Ultimately, due to the latch process at the flip-flops 173 and 174, the jitter of a delay time at the CAM module 200 is absorbed.

As described above, in the reception system 10 shown in FIG. 1, the host device 100 processes a composite stream CTS received from the CAM module 200 using LTSIDs and LTSs corresponding to respective PID packets, and reconfigures original TSs. In this case, in the host device 100, the LTSIDs and the LTSs corresponding to the respective PID packets are delayed for a time corresponding to a delay time of the CAM module 200 by the FIFO unit 145 and used.

For this reason, the host device 100 can appropriately perform assignment of the respective PID packets of the received composite stream CTS and adjustment of output timings, and can favorably reconfigure the original TSs. Accordingly, it is possible to favorably transmit and receive a plurality of TSs to and from the CAM module 200 as one stream.

In addition, in the reception system 10 shown in FIG. 1, the host device 100 does not add information, such as LTSIDs, LTSs, or the like, to the respective PID packets of the composite stream CTS transmitted to the CAM module 200. For this reason, it is possible to maintain the compatibility with existing standards.

### <2. Modified example>

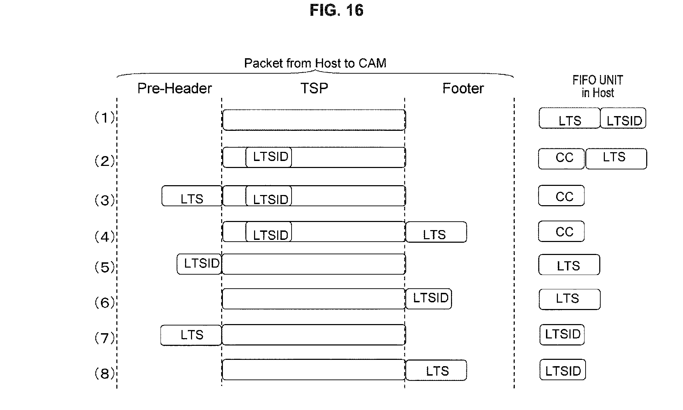

The above-described embodiment shows an example in which the LTSIDs and the LTSs of respective PID packets of a composite stream CTS transmitted to the CAM module 200 are delayed at the FIFO unit 145 in the host device 100 and used. In other words, the example corresponds to the pattern of (1) of FIG. 16.

However, as a pattern that uses a delay by the FIFO unit 145 in the host device 100, it is also possible to consider the patterns of (2) to (8) of FIG. 16. The pattern of (2) is an example of using an LTSID, an LTS, and a CC by adding the LTSID to a continuity counter (CC) field in a TS header in a TSP (PID packet) and delaying the LTS and the CC (original value of the CC field) at the FIFO unit 145 in the host device 100.

In this case, in the host device 100, the respective PID packets of the received composite stream CTS are assigned to respective streams based on LTSIDs added to the PID packets. Also, in the host device 100, values of CC fields of the respective PID packets of the received composite stream CTS are substituted for CCs (original values of the CC fields) delayed at the FIFO unit 145. Further, in the host device 100, the output timings of respective PID packets are adjusted in each stream based on LTSs delayed at the FIFO unit 145, so that a plurality of TSs are reconfigured.

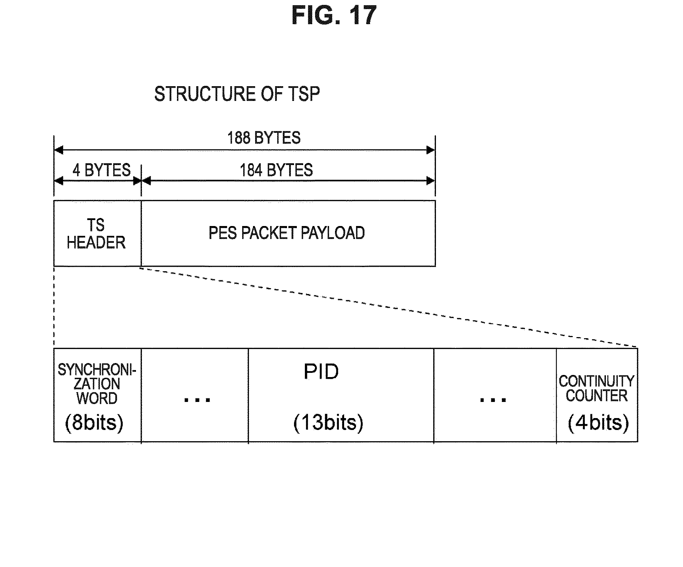

FIG. 17 shows the structure of a TSP (PID packet). A TSP has a fixed length of 188 bytes. The first four bytes of the TSP are a TS header, and the following 184 bytes are a packetized elementary stream (PES) packet payload. In the TS header, an 8-bit synchronization word (0x47) is at the forefront, a 13-bit PID is additionally present, and a 4-bit CC field is at the end.

Referring back to FIG. 16, the pattern of (3) is an example of using an LTSID, an LTS, and a CC by adding the LTS in front of a TSP as a pre-header, adding the LTSID to a CC field in a TS header in the TSP, and delaying only a CC (original value of the CC field) at the FIFO unit 145 in the host device 100.

In this case, in the host device 100, the respective PID packets of the received composite stream CTS are assigned to respective streams based on LTSIDs added to the PID packets. Also, in the host device 100, values of CC fields of the respective PID packets of the received composite stream CTS are substituted for CCs (original values of the CC fields) delayed at the FIFO unit 145. Further, in the host device 100, the output timings of respective PID packets are adjusted in each stream based on LTSs added to the PID packets, so that a plurality of TSs are reconfigured.

The pattern of (4) is an example of using an LTSID, an LTS, and a CC by adding the LTS behind a TSP as a footer, adding the LTSID to a CC field in a TS header in the TSP, and delaying only a CC (original value of the CC field) at the FIFO unit 145 in the host device 100.

In this case, in the host device 100, the respective PID packets of the received composite stream CTS are assigned to respective streams based on LTSIDs added to the PID packets. Also, in the host device 100, values of CC fields of the respective PID packets of the received composite stream CTS are substituted for CCs (original values of the CC fields) delayed at the FIFO unit 145. Further, in the host device 100, the output timings of respective PID packets are adjusted in each stream based on LTSs added to the PID packets, so that a plurality of TSs are reconfigured.

The pattern of (5) is an example of using an LTSID and an LTS by adding the LTSID in front of a TSP as a pre-header and delaying only the LTS at the FIFO unit 145 in the host device 100. In this case, in the host device 100, the respective PID packets of the received composite stream CTS are assigned to respective streams based on LTSIDs added to the PID packets. Also, in the host device 100, the output timings of respective PID packets are adjusted in each stream based on LTSs delayed at the FIFO unit 145, so that a plurality of TSs are reconfigured.

The pattern of (6) is an example of using an LTSID and an LTS by adding the LTSID behind a TSP as a footer and delaying only the LTS at the FIFO unit 145 in the host device 100. In this case, in the host device 100, the respective PID packets of the received composite stream CTS are assigned to respective streams based on LTSIDs added to the PID packets. Also, in the host device 100, the output timings of respective PID packets are adjusted in each stream based on LTSs delayed at the FIFO unit 145, so that a plurality of TSs are reconfigured.

The pattern of (7) is an example of using an LTSID and an LTS by adding the LTS in front of a TSP as a pre-header and delaying only the LTSID at the FIFO unit 145 in the host device 100. In this case, in the host device 100, the respective PID packets of the received composite stream CTS are assigned to respective streams based on LTSIDs delayed at the FIFO unit 145. Also, in the host device 100, the output timings of respective PID packets are adjusted in each stream based on LTSs added to the PID packets, so that a plurality of TSs are reconfigured.

The pattern of (8) is an example of using an LTSID and an LTS by adding the LTS behind a TSP as a footer and delaying only the LTSID at the FIFO unit 145 in the host device 100. In this case, in the host device 100, the respective PID packets of the received composite stream CTS are assigned to respective streams based on LTSIDs delayed at the FIFO unit 145. Also, in the host device 100, the output timings of respective PID packets are adjusted in each stream based on LTSs added to the PID packets, so that a plurality of TSs are reconfigured.

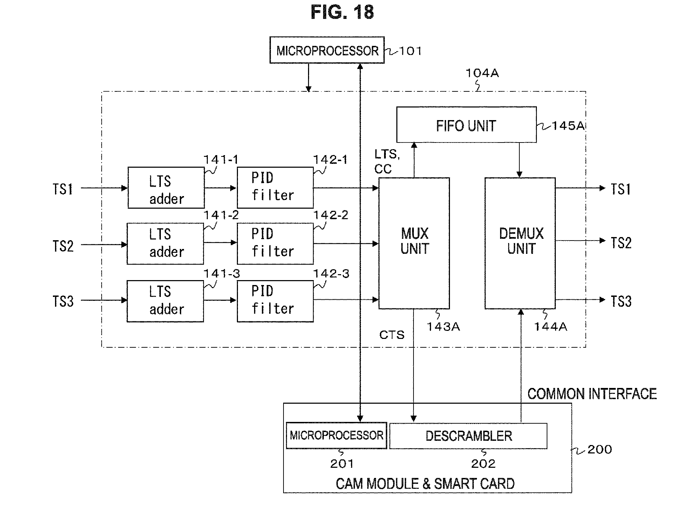

FIG. 18 shows a configuration example of a CI controller 104A corresponding to the pattern of (2) described above. In FIG. 18, portions corresponding to FIG. 2 are indicated by the same symbols, and detailed descriptions are appropriately omitted. The controller 104A includes LTS adders 141-1, 141-2, and 141-3, and PID filters 142-1, 142-2, and 142-3. Also, the controller 104A includes a MUX unit 143A, a DEMUX unit 144A, and an FIFO unit 145A.

The MUX unit 143A generates one stream, that is, a composite stream CTS, by combining PID packets of TSs TS1, TS2, and TS3. Also, the MUX unit 143A sequentially transmits the PID packets of the composite stream CTS to a CAM module 200 through a CI.

In addition, the MUX unit 143A adds LTSIDs to CC fields in the headers of the respective PID packets of the composite stream CTS transmitted to the CAM module 200. These LTSIDs are stream identification information for identifying the original TSs of the respective PID packets, and are generated and used when the composition stream CTS is generated.

Further, the MUX unit 143A outputs and supplies LTSs corresponding to the respective PID packets of the composite stream CTS transmitted to the CAM module 200 and CCs (original values of CC fields) to the FIFO unit 145 according to the transmission timings of the respective PID packets. An LTS is time information representing a time position of each PID packet in an original TS, and for example, the LTSs added by the LTS adders 141-1, 141-2, and 141-3 as described above are used separately.

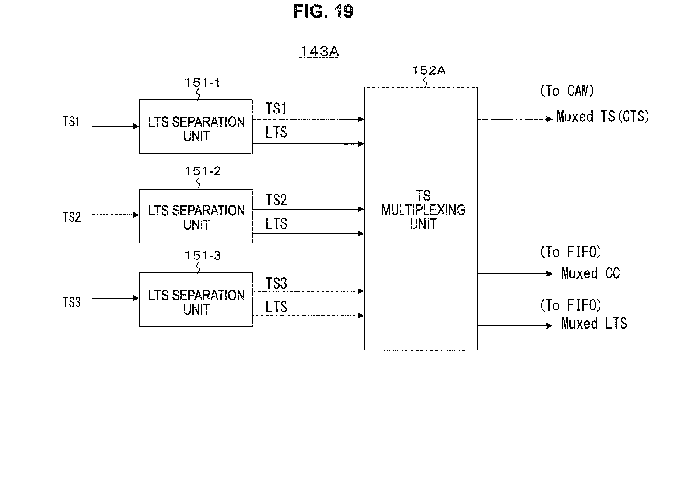

FIG. 19 shows a configuration example of the MUX unit 143A. In FIG. 19, portions corresponding to FIG. 3 are indicated by the same symbols, and the detailed descriptions of the portions are appropriately omitted. The MUX unit 143A includes LTS separation units 151-1, 151-2, and 151-3, and a TS multiplexing unit 152A. The LTS separation units 151-1, 151-2, and 151-3 separate the LTSs from the respective PID packets of the TSs TS1, TS2, and TS3, respectively. Then, the LTS separation units 151-1, 151-2, and 151-3 output the TSs TS1, TS2, and TS3 consisting of the respective PID packets to which no LTSs are added, and also output the LTSs that have been added to the respective PID packets.

The TS multiplexing unit 152A generates a composite stream CTS by combining the respective PID packets of the TSs TS1, TS2, and TS3 respectively output from the LTS separation units 151-1, 151-2, and 151-3. For example, the respective PID packets of the TSs TS1, TS2, and TS3 are temporarily stored in dual-port memories which are not shown in the drawing, taken out in order of time, and combined. The TS multiplexing unit 152A sequentially transmits the respective PID packets of the composite stream CTS to the CAM module 200 through the CI.

Also, the TS multiplexing unit 152A generates LTSIDs for identifying original TSs of the respective PID packets of the composite stream CTS transmitted to the CAM module 200, and adds LTSIDs to CC fields in the headers of the respective PID packets. Then, the TS multiplexing unit 152A sequentially outputs CCs which are original values of the CC fields of the respective PID packets according to the transmission timings of the respective PID packets, and transmits the CCs to the FIFO unit 145. Further, the TS multiplexing unit 152A sequentially outputs the LTSs corresponding to the respective PID packets using the LTSs output from the LTS separation units 151-1, 151-2, and 151-3 according to the transmission timings of the respective PID packets, and transmits the output LTSs to the FIFO unit 145.

Referring back to FIG. 18, the FIFO unit 145A outputs the LTSs and the CCs output in sequence from the MUX unit 143A with a delay of the amount of time corresponding to the delay time from reception to transmission of the composite stream CTS at the CAM module 200. The delay time at the FIFO unit 145A is controlled by a microprocessor 101.

The DEMUX unit 144A receives the composite stream CTS transmitted from the CAM module 200. Then, the DEMUX unit 144A processes the respective PID packets of the received composite stream based on the LTSIDs added to the respective PID packets and the LTSs and the CCs corresponding to the respective PID packets and output with the delay from the FIFO unit 145A.

In other words, the DEMUX unit 144A assigns the respective PID packets of the received composite stream to respective streams according to the LTSIDs. Also, the DEMUX unit 144 substitutes values of CC fields of the respective PID packets of the received composite stream CTS for the CCs (original values of the CC fields). Further, the DEMUX unit 144A places the respective PID packets at time positions in the respective assigned streams according to the LTSs, thereby reconfiguring the TSs TS1, TS2, and TS3.

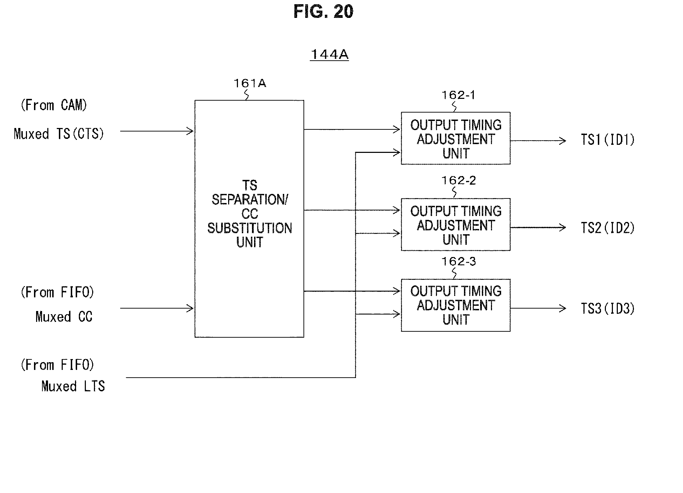

FIG. 20 shows a configuration example of the DEMUX unit 144A. In FIG. 20, portions corresponding to FIG. 4 are indicated by the same symbols, and the detailed descriptions of the portions are appropriately omitted. The DEMUX unit 144A includes a TS separation/CC substitution unit 161A and output timing adjustment units 162-1, 162-2, and 162-3.

The TS separation/CC substitution unit 161A assigns the respective PID packets of the composite stream received from the CAM module 200 to the respective streams based on the LTSIDs added to the respective PID packets. Also, the TS separation/CC substitution unit 161A substitutes the values of the CC fields of the respective PID packets assigned to the respective streams for CCs (original values of the CC fields) output with the delay from the FIFO unit 145.

The output timing adjustment units 162-1, 162-2, and 162-3 place the respective PID packets at time positions in the respective streams according to the LTSs corresponding to the respective PID packets and output with the delay from the FIFO unit 145. Then, the output timing adjustment units 162-1, 162-2, and 162-3 output the reconfigured TSs TA1, TS2, and TS3, respectively.

Operation of the CI controller 104 shown in FIG. 18 will be described. The TSs TS1, TS2, and TS3 supplied from the demodulators 103-1, 103-2, and 103-3 (see FIG. 1) are supplied to the LTS adders 141-1, 141-2, and 141-3, respectively. At the LTS adders 141-1, 141-2, and 141-3, the LTSs corresponding to input times are added to the respective PID packets (TSPs) of the input TSs TS1, TS2, and TS3, respectively.

The TSs TS1, TS2, and TS3 in which the LTSs are added to the respective PID packets are supplied to the PID filters 142-1, 142-2, and 142-3, respectively. At the PID filters 142-1, 142-2, and 142-3, filtering is performed to exclude PID data packets of unselected service channels from the TSs TS1, TS2, and TS3, respectively.

The TSs TS1, TS2, and TS3 after filtering are supplied to the MUX unit 143A. At the MUX unit 143A, respective PID packets of the TSs TS1, TS2, and TS3 from which LTSs are removed are combined, so that the composite stream CTS is generated. At this time, at the MUX unit 143A, LTSIDs are added to CC fields in the headers of the respective PID packets. As described above, these LTSIDs are stream identification information for identifying original TSs of the respective PID packets, and are generated when the composition stream CTS is generated.

Also, from the MUX unit 143A, the LTSs corresponding to the respective PID packets of the composite stream CTS transmitted to the CAM module 200 and CCs (original values of the CC fields) are output according to the transmission timings of the respective PID packets and supplied to the FIFO unit 145. An LTS is time information representing a time position of each PID packet in an original TS, and for example, the LTSs added by the LTS adders 141-1, 141-2, and 141-3 as described above are used separately.

The LTSs and the CCs output in sequence from the MUX unit 143A are supplied to the FIFO unit 145A. From the FIFO unit 145A, the LTSs and the ITSIDs output in sequence from the MUX unit 143A are output with a delay of the amount of time corresponding to the delay time from reception to transmission of the composite stream CTS at the CAM module 200.

The LTSs and the CCs output in sequence from the FIFO unit 145A are supplied to the DEMUX unit 144A. At the DEMUX unit 144A, the composite stream CTS sent from the CAM module 200 through the CI is received. Since the delay time of the FIFO unit 145A is set as described above, the LTSs and the CCs corresponding to the respective PID packets of the composite stream CTS are supplied from the FIFO unit 145 to the DEMUX unit 144A according to the reception timings of the respective PID packets.

At the DEMUX unit 144A, the PID packets of the composite stream CTS are assigned to the respective streams according to the LTSIDs corresponding to the respective PID packets. Also, the values of the CC fields of the respective PID packets are substituted for the CCs (original values of the CC fields) delayed at the FIFO unit 145A. Further, at the DEMUX unit 144A, output timings are adjusted so that the respective PID packets are placed at the time positions in the respective assigned streams according to the LTSs corresponding to the respective PID packets, and the reconfigured TSs TS1, TS2, and TS3 are obtained.

The detailed descriptions of configurations of a CI controller corresponding to the patterns of (3) to (8) will be omitted. Like in the above-described configuration examples corresponding to the patterns of (1) and (2), in the configurations corresponding to the patterns of (3) to (8), LTSs, LTSIDs, CCs, and the like are delayed by an FIFO unit, and respective PID packets of a received composite stream CTS are processed with the delayed LTSs, LTSIDs, CCS, and the like.

The embodiment described above has shown an example in which LTSs are absolute times corresponding to input times to the CI controller 104. However, it is also possible to consider setting LTSs to be relative times as will be described below. Calculation of the number of necessary bits of an LTS involves a maximum delay regulation of the CAM module 200 in the case of absolute times, but does not involve a maximum delay regulation of the CAM module 200 in the case of relative times.

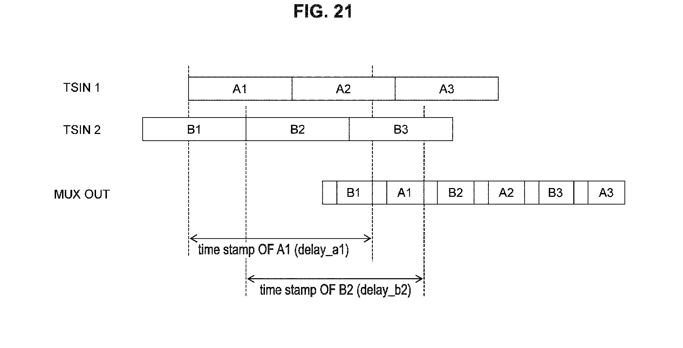

A method of finding an LTS (relative time) corresponding to each PID packet and timing adjustment using LTSs (relative time) upon reconfiguration will be described. FIG. 21 schematically illustrates a method of finding an LTS (relative time) corresponding to each PID packet. For convenience of description, the drawing shows an example of two TSs TSIN 1 and TSIN 2. "A1," "A2," ... denote PID packets constituting the TS TSIN 1. Also, "B1, "B2," ... denote PID packets constituting the TS TSIN 2.

For example, an LTS (relative time) added to the PID packet "A1" is considered to be a delay time deley_a1 from a time at which the PID packet is input to an input buffer to a time at which the PID packet is actually combined at the MUX unit 143. Also, for example, an LTS (relative time) added to the PID packet "B2" is considered to be a delay time deley_b2 from a time at which the PID packet is input to the input buffer to a time at which the PID packet is actually combined at the MUX unit 143. Although detailed descriptions are omitted, this is the same for other PID packets.

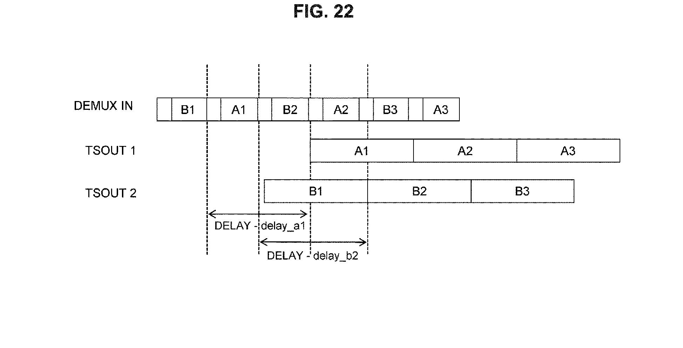

FIG. 22 schematically illustrates timing adjustment using LTSs (relative time) upon reconfiguration. For convenience of description, the drawing shows an example in which two TSs TSOUT 1 and TSOUT 2 are reconfigured. Like in FIG. 21 described above, "A1," "A2," ... denote PID packets constituting the reconfigured TS TSOUT 1. Also, "B1, "B2," ... denote PID packets constituting the reconfigured TS TSOUT 2.

For example, the demultiplexed PID packet "A1" is delayed for "DELAY-deley_a1," thus being adjusted in timing. Here, "DELAY" is a fixed delay and has a value that is at least equal to or larger than the largest value of LTSs (relative time). Also, for example, the demultiplexed PID packet "B2" is delayed for "DELAY-deley_b2," thus being adjusted in timing. Although detailed descriptions are omitted, this is the same for other PID packets.

In the embodiment described above, the host device 100 includes three tuners 102-1, 102-2, and 102-3 and processes three TSs TS1, TS2, and TS3. Likewise, it is also possible to apply the present technology to a case of processing four or more TSs as well as a case of processing two TSs.

In addition, the embodiment described above has shown an example in which the host device 100 transmits and receives a composite stream to and from the CAM module 200 connected through a DVB-CI common interface or a CI+ common interface. However, it is also possible to apply the present technology to a case of wiredly or wirelessly transmitting and receiving such a composite stream between a host device and another external device.

Additionally, the present technology may also be configured as below.

### (1)

An electronic device including:
a composite stream generation unit configured to generate a composite stream by combining transport stream packets of a plurality of transport streams;
a stream transmission unit configured to transmit the generated composite stream to an external device;
a processing information output unit configured to output processing information for processing each of the transport stream packets of the composite stream according to a transmission timing of each of the transport stream packets;
a processing information delay unit configured to output the output processing information with a delay of an amount of time corresponding to a delay time from reception to transmission of the composite stream at the external device;
a stream reception unit configured to receive the composite stream from the external device; and
a processing unit configured to process each of the transport stream packets of the received composite stream based on the processing information that has been output with the delay and corresponds to each of the transport stream packets.

### (2)

The electronic device according to (1),
wherein the processing information for processing each of the transport stream packets includes time information representing a time position of each of the transport stream packets in an original transport stream of each of the transport stream packets, and
the processing unit reconfigures the plurality of transport streams by placing each of the transport stream packets of the received composite stream at a time position in a stream assigned each of the transport stream packets according to the time information corresponding to each of the transport stream packets.

### (3)

The electronic device according to (2),
wherein the processing information for processing each of the transport stream packets further includes stream identification information for identifying the original transport stream of each of the transport stream packets, and
the processing unit assigns each of the transport stream packets of the received composite stream to the stream according to the stream identification information corresponding to each of the transport stream packets.

### (4)

The electronic device according to (2), further including:
an identification information addition unit configured to add stream identification information for identifying the original transport stream to each of the transport stream packets of the generated composite stream; and
an identification information acquisition unit configured to acquire the stream identification information from each of the transport stream packets of the received composite stream,
wherein the processing unit assigns each of the transport stream packets of the received composite stream to the stream according to the stream identification information acquired from each of the transport stream packets.

### (5)

The electronic device according to (4),
wherein the identification information addition unit inserts the stream identification information in continuity counter fields in headers of the transport stream packets,
the processing information for processing each of the transport stream packets includes original values of the continuity counter fields in the headers of the transport stream packets, and
the processing unit substitutes values of the continuity counter fields in the headers of the respective transport stream packets of the received composite stream for the original values of the continuity counter fields corresponding to the respective transport stream packets.

### (6)

The electronic device according to any of (1) to (5), further including:
a delay control unit configured to control a delay time at the processing information delay unit based on information on the delay time from reception to transmission of the composite stream at the external device.

### (7)

The electronic device according to (6),
wherein the delay control unit acquires the information on the delay time from reception to transmission of the composite stream at the external device by communicating with the external device.

### (8)

The electronic device according to any of (1) to (7),
wherein the stream transmission unit transmits the composite stream to the external device through a DVB-CI common interface or a CI+ common interface, and
the external device is a conditional access module that performs a descrambling process.

### (9)

The electronic device according to (1),
wherein the processing information for processing each of the transport stream packets includes stream identification information for identifying an original transport stream of each of the transport stream packets, and
the processing unit reconfigures the plurality of transport streams by assigning each of the transport stream packets of the received composite stream to a stream according to the stream identification information that has been output with a delay and corresponds to each of the transport stream packets.

### (10)

The electronic device according to (1), further including:
an identification information addition unit configured to insert stream identification information for identifying an original transport stream in a continuity counter field in a header of each of the transport stream packets of the generated composite stream; and
an identification information acquisition unit configured to acquire the stream identification information from each of the transport stream packets of the received composite stream,
wherein the processing information for processing the transport stream packets includes an original value of the continuity counter field in the header of each of the transport stream packets, and
the processing unit substitutes a value of the continuity counter field in the header of each of the transport stream packets of the received composite stream for the original value of the continuity counter field corresponding to each of the transport stream packets, and reconfigures the plurality of transport streams by assigning each of the transport stream packets of the received composite stream to the stream according to the stream identification information acquired from each of the transport stream packets.

### (11)

A method of transmitting and receiving a stream in an electronic device, the method including:
a composite stream generation step of combining transport stream packets of a plurality of transport streams to generate a composite stream;
a stream transmission step of transmitting the generated composite stream to an external device;
a processing information output step of outputting processing information for processing each of the transport stream packets of the composite stream according to a transmission timing of each of the transport stream packets;
a processing information delay step of outputting the output processing information with a delay of an amount of time corresponding to a delay time from reception to transmission of the composite stream at the external device;
a stream reception step of receiving the composite stream from the external device; and
a processing step of processing each of the transport stream packets of the received composite stream based on the processing information that has been output with the delay and corresponds to each of the transport stream packets.

### (12)

A program causing a computer to function as:
a composite stream generation means for generating a composite stream by combining transport stream packets of a plurality of transport streams;
a stream transmission means for transmitting the generated composite stream to an external device;
a processing information output means for outputting processing information for processing each of the transport stream packets of the composite stream according to a transmission timing of each of the transport stream packets;
a processing information delay means for outputting the output processing information with a delay of an amount of time corresponding to a delay time from reception to transmission of the composite stream at the external device;
a stream reception means for receiving the composite stream from the external device; and
a processing unit means for processing each of the transport stream packets of the received composite stream based on the processing information that has been output with the delay and corresponds to each of the transport stream packets.

### (13)

A host device including:
a stream transmission unit configured to transmit a composite stream to an external device, the composite stream being obtained by combining packets of a plurality of streams;
a processing information delay unit configured to output processing information for processing each of the packets of the composite stream with a delay of an amount of time corresponding to a delay time from reception to transmission of the composite stream at the external device; and
a processing unit configured to process each of the packets of the composite stream received from the external device based on the processing information output with the delay.

### (14)

The host device according to (13),
wherein the streams are transport streams, and
the packets are transport stream packets.

### (15)

The host device according to (13) or (14), further including:
a stream acquisition unit configured to acquire the plurality of streams; and
a packet selection unit configured to select a predetermined packet from each of the acquired streams,
wherein the selected packet is included in the composite stream.

### (16)

A method of transmitting and receiving a stream in a host device, the method including:
transmitting a composite stream to an external device, the composite stream being obtained by combining packets of a plurality of streams;
outputting processing information for processing each of the packets of the composite stream with a delay of an amount of time corresponding to a delay time from reception to transmission of the composite stream at the external device; and
processing each of the packets of the composite stream received from the external device based on the processing information output with the delay.

### Reference Signs List

- 10: reception system
- 100: host device
- 101: microprocessor
- 102-1 to 102-3: tuner
- 103-1 to 103-3: demodulator
- 104 and 104A: communication interface (CI) controller
- 105-1 to 105-3: demultiplexer
- 106-1 to 106-3: MPEG decoder
- 141-1 to 141-3: LTS adder
- 142-1 to 142-3: PID filter
- 143 and 143A: multiplex (MUX) unit
- 144 and 144A: demultiplex (DEMUX) unit
- 145 and 145A: FIFO unit
- 151-1 to 151-3: LTS separation unit
- 152 and 152A: TS multiplexing unit
- 161: TS separation unit
- 161A: TS separation/CC substitution unit
- 162-1 to 162-3: output timing adjustment unit
- 171a, 171b, 171c, 172a, 172b, 172c, 173, and 174: flip-flop
- 200: CAM module
- 201: microprocessor
- 202: descrambler

## Claims

1. An electronic device comprising:
a composite stream generation unit configured to generate a composite stream by combining transport stream packets of a plurality of transport streams;
a stream transmission unit configured to transmit the generated composite stream to an external device;
a processing information output unit configured to output processing information for processing each of the transport stream packets of the composite stream according to a transmission timing of each of the transport stream packets;
a processing information delay unit configured to output the output processing information with a delay of an amount of time corresponding to a delay time from reception to transmission of the composite stream at the external device;
a stream reception unit configured to receive the composite stream from the external device; and
a processing unit configured to process each of the transport stream packets of the received composite stream based on the processing information that has been output with the delay and corresponds to each of the transport stream packets.

2. The electronic device according to claim 1,
wherein the processing information for processing each of the transport stream packets includes time information representing a time position of each of the transport stream packets in an original transport stream of each of the transport stream packets, and
the processing unit reconfigures the plurality of transport streams by placing each of the transport stream packets of the received composite stream at a time position in a stream assigned each of the transport stream packets according to the time information corresponding to each of the transport stream packets.

3. The electronic device according to claim 2,
wherein the processing information for processing each of the transport stream packets further includes stream identification information for identifying the original transport stream of each of the transport stream packets, and
the processing unit assigns each of the transport stream packets of the received composite stream to the stream according to the stream identification information corresponding to each of the transport stream packets.

4. The electronic device according to claim 2, further comprising:
an identification information addition unit configured to add stream identification information for identifying the original transport stream to each of the transport stream packets of the generated composite stream; and
an identification information acquisition unit configured to acquire the stream identification information from each of the transport stream packets of the received composite stream,
wherein the processing unit assigns each of the transport stream packets of the received composite stream to the stream according to the stream identification information acquired from each of the transport stream packets.

5. The electronic device according to claim 4,
wherein the identification information addition unit inserts the stream identification information in continuity counter fields in headers of the transport stream packets,
the processing information for processing each of the transport stream packets includes original values of the continuity counter fields in the headers of the transport stream packets, and
the processing unit substitutes values of the continuity counter fields in the headers of the respective transport stream packets of the received composite stream for the original values of the continuity counter fields corresponding to the respective transport stream packets.

6. The electronic device according to claim 1, further comprising:
a delay control unit configured to control a delay time at the processing information delay unit based on information on the delay time from reception to transmission of the composite stream at the external device.

7. The electronic device according to claim 6,
wherein the delay control unit acquires the information on the delay time from reception to transmission of the composite stream at the external device by communicating with the external device.

8. The electronic device according to claim 1,
wherein the stream transmission unit transmits the composite stream to the external device through a DVB-CI common interface or a CI+ common interface, and
the external device is a conditional access module that performs a descrambling process.

9. The electronic device according to claim 1,
wherein the processing information for processing each of the transport stream packets includes stream identification information for identifying an original transport stream of each of the transport stream packets, and
the processing unit reconfigures the plurality of transport streams by assigning each of the transport stream packets of the received composite stream to a stream according to the stream identification information that has been output with a delay and corresponds to each of the transport stream packets.

10. The electronic device according to claim 1, further comprising:
an identification information addition unit configured to insert stream identification information for identifying an original transport stream in a continuity counter field in a header of each of the transport stream packets of the generated composite stream; and
an identification information acquisition unit configured to acquire the stream identification information from each of the transport stream packets of the received composite stream,
wherein the processing information for processing the transport stream packets includes an original value of the continuity counter field in the header of each of the transport stream packets, and
the processing unit substitutes a value of the continuity counter field in the header of each of the transport stream packets of the received composite stream for the original value of the continuity counter field corresponding to each of the transport stream packets, and reconfigures the plurality of transport streams by assigning each of the transport stream packets of the received composite stream to the stream according to the stream identification information acquired from each of the transport stream packets.

11. A method of transmitting and receiving a stream in an electronic device, the method comprising:
a composite stream generation step of combining transport stream packets of a plurality of transport streams to generate a composite stream;
a stream transmission step of transmitting the generated composite stream to an external device;
a processing information output step of outputting processing information for processing each of the transport stream packets of the composite stream according to a transmission timing of each of the transport stream packets;
a processing information delay step of outputting the output processing information with a delay of an amount of time corresponding to a delay time from reception to transmission of the composite stream at the external device;
a stream reception step of receiving the composite stream from the external device; and
a processing step of processing each of the transport stream packets of the received composite stream based on the processing information that has been output with the delay and corresponds to each of the transport stream packets.

12. A program causing a computer to function as:
a composite stream generation means for generating a composite stream by combining transport stream packets of a plurality of transport streams;
a stream transmission means for transmitting the generated composite stream to an external device;
a processing information output means for outputting processing information for processing each of the transport stream packets of the composite stream according to a transmission timing of each of the transport stream packets;
a processing information delay means for outputting the output processing information with a delay of an amount of time corresponding to a delay time from reception to transmission of the composite stream at the external device;
a stream reception means for receiving the composite stream from the external device; and
a processing unit means for processing each of the transport stream packets of the received composite stream based on the processing information that has been output with the delay and corresponds to each of the transport stream packets.

13. A host device comprising:
a stream transmission unit configured to transmit a composite stream to an external device, the composite stream being obtained by combining packets of a plurality of streams;
a processing information delay unit configured to output processing information for processing each of the packets of the composite stream with a delay of an amount of time corresponding to a delay time from reception to transmission of the composite stream at the external device; and
a processing unit configured to process each of the packets of the composite stream received from the external device based on the processing information output with the delay.

14. The host device according to claim 13,
wherein the streams are transport streams, and
the packets are transport stream packets.

15. The host device according to claim 13, further comprising:
a stream acquisition unit configured to acquire the plurality of streams; and
a packet selection unit configured to select a predetermined packet from each of the acquired streams,
wherein the selected packet is included in the composite stream.

16. A method of transmitting and receiving a stream in a host device, the method comprising:
transmitting a composite stream to an external device, the composite stream being obtained by combining packets of a plurality of streams;
outputting processing information for processing each of the packets of the composite stream with a delay of an amount of time corresponding to a delay time from reception to transmission of the composite stream at the external device; and
processing each of the packets of the composite stream received from the external device based on the processing information output with the delay.
